# DEMANDE DE BREVET EUROPEEN

(11) **EP 1 659 381 A1**
(43) Date de publication de la demande: **24.05.2006**
(21) Numéro de dépôt: 04405715.6
(22) Date de dépôt: 17.11.2004
(51) Int. Cl.: G01J 3/51

(54) **Dispositif de reconnaissance des couleurs**

(71) Demandeur: Maurer, David, 2000 Neuchatel (CH)
(72) Inventeur: Maurer, David, 2000 Neuchatel (CH)
(74) Mandataire: GLN

(57) **Abrégé**

L'invention concerne un dispositif de reconnaissance de la couleur d'un objet permettant d'obtenir une bonne résolution sur l'ensemble du spectre et un résultat reproductible, quel que soit le type de surface, texturée ou non.

Selon l'invention, le dispositif comporte une photodiode (13) divisée en trois secteurs distincts ou trois photodiodes, munis chacun de filtres laissant passer seulement l'une des couleurs de base, rouge, verte et bleue, et fournissant trois signaux électriques représentatifs des composantes rouge, verte et bleue de la couleur de l'objet, un amplificateur (16) à gain variable et un microcontrôleur (17) programmé, notamment, pour le commander de manière à ce qu'il applique, à chaque signal provenant de la photodiode (13), une amplification variable, indépendante et automatique.

## Description

La présente invention se rapporte au domaine des détecteurs optiques. Elle concerne, plus particulièrement, un dispositif de reconnaissance des couleurs, capable de fournir une information sur une couleur sous forme visuelle et auditive. Elle concerne également un procédé permettant sa calibration.

Les premiers appareils de ce type ont été développés pour aider les handicapés visuels dans leur vie quotidienne.

Mais des domaines d'activités variés présentent un intérêt pour un appareil permettant d'identifier une couleur de manière fiable, précise et reproductible. Par exemple, les décorateurs d'intérieur, les carrossiers, les peintres et, plus généralement, tous les corps de métier travaillant avec la couleur sont susceptibles de bénéficier des avantages d'un tel instrument de mesure.

Il existe, sur le marché, plusieurs appareils capables de mesurer une couleur, mais dans la plupart des cas, il s'agit de spectromètres dont l'interprétation de la mesure n'est pas assez simple et directe pour les applications évoquées ci-dessus. De plus, ils sont parfois encombrants, difficiles d'utilisation et particulièrement coûteux, ce qui les rend inaccessibles pour la majorité des personnes concernées.

Un système décrit dans le document EP 03 405363.7 permet de pallier la plupart des problèmes ci-dessus en offrant une mesure de couleur simple, fiable et directe. Dans un tel dispositif, une source de lumière blanche éclaire la surface à analyser. Un détecteur capte les composantes rouge, verte et bleue {R, V, B} de la lumière réfléchie par l'objet et délivre trois signaux quantifiés entre 0 et 255. Le dispositif doit être calibré sur une surface très lisse d'un blanc pur, pour laquelle les valeurs du code R, V, B sont maximales, soit R=255, V=255 et B=255. En effet, c'est pour cette référence que la réflexion est maximale.

Le document précité décrit comment améliorer la résolution de la mesure, dans les nuances extrêmes, claires ou sombres. Mais cette amélioration se fait au détriment de la détection des nuances opposées à celles privilégiées.

Par ailleurs, il a été constaté que la mesure d'un blanc pur sur une surface texturée, de type crépi, ne permet pas d'obtenir une bonne reproductibilité. On obtient, par exemple, des valeurs R=220, V=220 et B=220, à cause des pertes dues à une moins bonne réflexion. De plus, si l'on cherche à refaire cette mesure, du même blanc, sur des surfaces de textures différentes, le résultat sera à chaque fois différent. Il est donc impossible de mesurer une même couleur si la texture du support change.

La présente invention a pour but de pallier ces inconvénients en offrant un dispositif de reconnaissance de couleurs permettant d'obtenir une bonne résolution sur l'ensemble du spectre et un résultat reproductible, quel que soit le type de surface, texturée ou non.

De façon plus précise, l'invention concerne un dispositif reconnaissance de la couleur d'un objet, comportant :
- une source de lumière,
- une photodiode divisée en trois secteurs distincts ou trois photodiodes, munis chacun de filtres laissant passer seulement l'une des couleurs de base, rouge, verte et bleue et fournissant trois signaux électriques représentatifs des composantes rouge, verte et bleue de la couleur de l'objet,
- un amplificateur amplifiant lesdits signaux provenant de la photodiode,
- un convertisseur analogique numérique transformant les signaux amplifiés en une valeur numérique située à l'intérieur d'une échelle numérique,
- une mémoire électronique contenant une table de correspondance qui associe une couleur à au moins une combinaison possible desdites valeurs numériques,
- un microcontrôleur programmé pour :
   - identifier dans la table de correspondance la combinaison de valeurs numériques la plus proche de celle mesuré,
   - rechercher à quelle couleur correspond ladite combinaison, et
   - fournir un signal représentatif de cette couleur, et
- des moyens de signalisation répondant à ce signal pour fournir une information sur la couleur identifiée.

Selon l'invention, l'amplificateur, agissant sous les ordres du microcontrôleur, amplifie de manière variable, indépendante et automatique chaque signal provenant de la photodiode, afin de faire atteindre à chaque code, sa valeur maximale.

L'invention concerne également un procédé de calibration du dispositif défini ci-dessus, qui consiste principalement à :
- obtenir des signaux électriques représentatifs des composantes rouge, verte et bleue d'une surface de référence, dont la réflexion lumineuse correspond à celle d'une surface d'un blanc pur et ayant une texture similaire à celle de l'objet dont on veut identifier la couleur,
- amplifier lesdits signaux et les convertir en un triplet de valeurs {R, V, B} situées à l'intérieur de ladite échelle numérique, et
- varier le gain d'amplification de ces signaux jusqu'à ce que les trois valeurs dudit triplet atteignent les valeurs maximales de l'échelle.

D'autres caractéristiques de l'invention apparaîtront plus clairement à la lecture de la description qui suit, faite en regard du dessin annexé dans lequel :
- les figures 1a et 1b sont des vues schématiques du dispositif,
- la figure 2 montre une partie de la table de correspondance contenue dans la mémoire, et

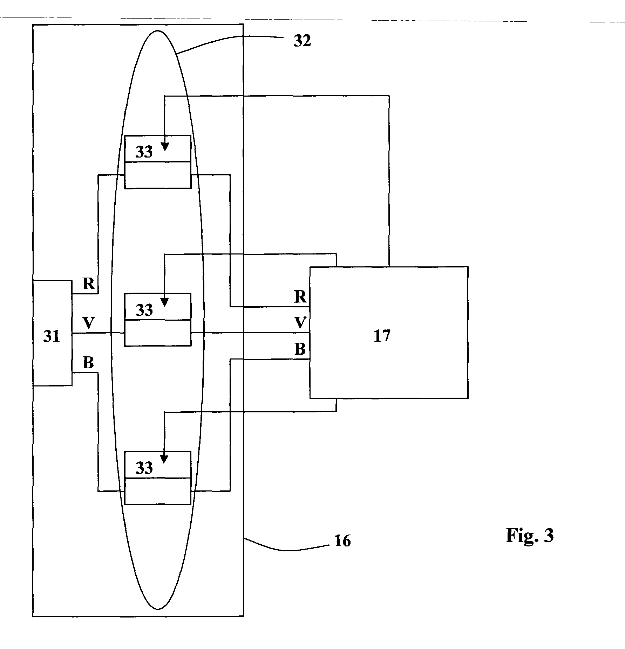

- la figure 3 représente, schématiquement, le système de calibration selon l'invention.

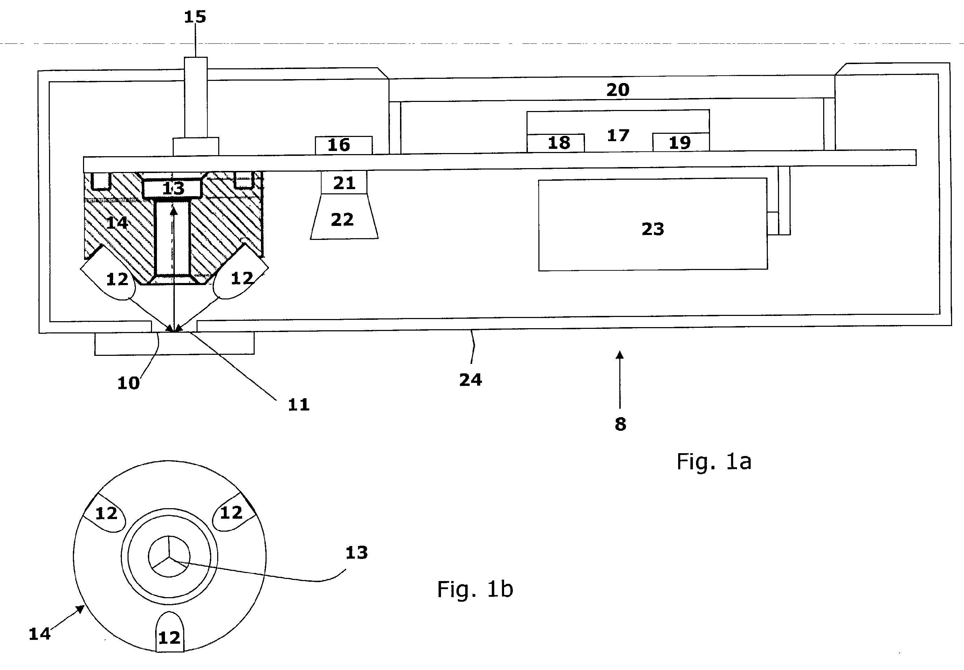

Sur la figure 1a, on a représenté un appareil 8 selon l'invention, destiné à mesurer la couleur d'une surface 10. Les composants de l'appareil sont logés dans un boîtier 24 de forme parallélépipédique, dont les dimensions sont, typiquement, de l'ordre de 120mm de long et 30mm de large. Ils sont alimentés par une source d'énergie 23.

Ces composants sont, principalement, une source de lumière blanche destinée à éclairer la surface 10 à travers une ouverture 11 ménagée sous le boîtier 24. Avantageusement, la source de lumière est formée par trois LED (de l'anglais Light Emitting Diode) blanches 12, peu coûteuses et consommant peu d'énergie. Par exemple, la firme Distrelec en commercialise sous la référence L3W33N. Le spectre d'une telle source ne couvre pas de manière homogène tout le domaine visible. Ceci pourrait être gênant, mais il sera expliqué plus loin comment cet inconvénient est surmonté.

Les LED blanches sont disposées autour de trois photodiodes 13 en silicium. De façon avantageuse et comme le montre particulièrement la figure 1b, les photodiodes sont réunies en une seule diode séparée en trois quartiers bien distincts. Chaque diode ou chacun des quartiers possède un filtre laissant passer seulement l'une des couleurs de base, rouge, verte et bleue, de manière à fournir trois signaux électriques représentatifs des composantes rouge, verte et bleue de la couleur mesurée

Les LED 12 éclairent la surface 10 avec un angle d'environ 45° par rapport aux photodiodes 13. Une tête optique 14 est disposée entre les LED 12 et les photodiodes 13 afin d'éviter qu'un éclairage direct des LED 12 entraîne une erreur de mesure.

Un bouton de commande extérieur 15 sert à déclencher les opérations de reconnaissance des couleurs et à calibrer l'appareil, opérations qui seront décrites ultérieurement.

Une partie de la lumière émise par les LED 12 est absorbée par l'objet 10. Le reste de la lumière est réfléchi, également à 45°, et est perçu par la photodiode 13. Celle-ci est couplée à un amplificateur 16 qui sera décrit en détail plus loin.

Les signaux électriques sont acheminés à un convertisseur analogique numérique 18 (CAN, ci-après) de type 8 bits, qui sert à convertir la tension des trois signaux entrants en une valeur numérique comprise entre 0 et 255, fournissant donc un triplet de valeurs {R, V, B}.

Un microcontrôleur 17 traite les valeurs fournies par le CAN. Il est associé à une mémoire électronique 19 et pilote des moyens de signalisation, à savoir soit un circuit audio 21 qui permet de fournir le résultat de l'analyse de couleur sous forme sonore par l'intermédiaire d'un haut-parleur 22, soit un afficheur 20 qui permet de fournir un code identifiant la couleur (exemple : RAL 9016, RAL 4010, etc...). L'homme du métier sait facilement adapter ce genre de moyens de signalisation à partir d'un microcontrôleur.

De manière avantageuse, le CAN 18, le microcontrôleur 17 et la mémoire 19 sont réunis en une seule puce électronique, telle que celle commercialisée par la firme Computer Controls sous la référence C8051F121. Dans le cas où le résultat est fourni sous forme audio, cette puce comprend aussi un convertisseur digital analogique fournissant un signal, transformé ensuite dans le circuit audio 21.

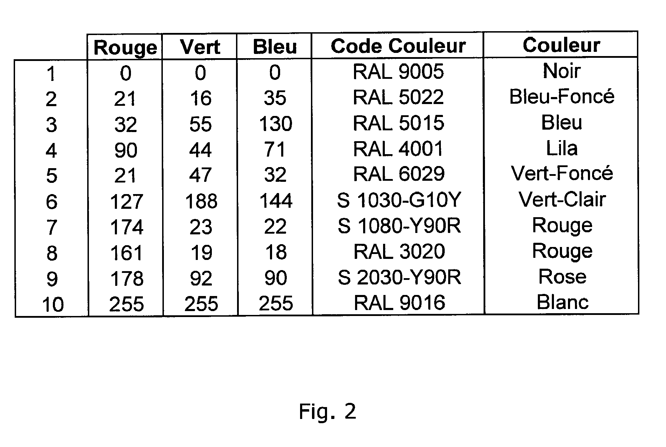

La mémoire 19 contient une table de correspondance, partiellement illustrée sur la figure 2, qui associe une couleur ou un code couleur à toutes les combinaisons possibles de signaux numériques {R, V, B}.

Pour réaliser cette table, les codes R, V, B des couleurs à enregistrer sont mesurés avec le même appareil. Ces codes, situés entre 0 et 255, sont affichés via l'écran de l'appareil et introduits par la suite dans la table de correspondance. La réalisation et l'utilisation d'une telle table est décrite en détail dans le document déjà cité.

Avec un tel système de détection, il est possible de différencier plus de 16 millions de combinaisons de couleurs. Ce nombre est limité à environ 130'000 en fixant une tolérance. Plus précisément, si une couleur donnée est enregistrée dans la table, en étant associée à un code dont les valeurs sont {x, y, z}, les mesures fournissant un code de valeurs {x+/-2, y+/-2, z+/-2} seront tous identifiés comme correspondant à cette couleur donnée.

En pratique, vu la capacité de la mémoire et le nombre de couleurs utilisées par les milieux intéressés, 8000 couleurs enregistrées dans la table de correspondance suffisent.

En mesurant préalablement tous les codes couleur que l'on désire enregistrer, les défauts dus, notamment, aux effets de la non homogénéité du spectre des LED blanches 12, déjà évoquée ci-dessus, sont supprimés. De même, des différences de sensibilité des photodiodes selon les couleurs filtrées sont aussi évitées.

La grille de correspondance est établie en attribuant le code {R, V, B} maximal, R=255, V=255 et B=255, à un blanc pur. La référence est établie sur une surface très lisse, car elle permet d'obtenir le maximum de réflexion.

Or, la mesure de ce même blanc pur sur une surface rugueuse entraîne des pertes de réflexion et donne, par exemple, comme code couleur, les valeurs suivantes R=220, V=220 et B=220.

On pourrait, effectivement, établir la référence sur la réflexion obtenue pour ce blanc pur sur cette surface rugueuse, mais il faudrait alors reprogrammer entièrement la table de correspondance pour cette surface, cette table n'étant pas valable pour un autre type de surface.

Pour pallier cet inconvénient, l'amplificateur 16 est à gain variable et impose une amplification indépendante à chaque composante {R, V, B}, de manière à faire atteindre à chaque code sa valeur maximale. L'amplificateur 16 agit sous le contrôle du microcontrôleur 17 qui est programmé pour effecteur ces opérations automatiquement.

Les amplificateurs variables courants du marché ne permettent pas une amplification suffisante. C'est pourquoi, l'amplificateur 16 comporte un premier étage d'amplification fixe 31 et un second étage d'amplification variable 32. Pour chacun de ces étages, trois structures amplificatrices sont prévues, une par composante, chacune dotée d'une résistance de contre-réaction. Pour le deuxième étage, celles-ci sont des potentiomètres numériques 33, commandés automatiquement par le microcontrôleur 17 afin de faire varier automatiquement le gain des amplificateurs de cet étage.

En pratique, l'appareil est calibré, avant chaque mesure de couleurs, sur une surface de référence d'un blanc pur, dont la texture correspond à celle de la surface à mesurer.

La calibration se déroule selon les étapes suivantes.
- L'appareil est mis en mode calibration au moyen du bouton 15 et l'utilisateur le place sur la surface de référence texturée et commande une mesure. Les LED blanches 12 éclairent momentanément cette surface et la lumière réfléchie est perçue par les trois photodiodes 13 qui fournissent des signaux électriques représentatifs des composantes {R, V, B} de la couleur de la surface de référence.
- Les signaux sont amplifiés par l'amplificateur 16 et convertis par le CAN 18 en un triplet de valeurs {R, V, B} comprises entre 0 et 255. (Par exemple, R=220, V=220 et B=220).
- Le triplet {R, V, B} fourni par le CAN 18 arrive dans le microcontrôleur 17.
- Le microcontrôleur 17 commande les trois potentiomètres numériques 33, en leur envoyant des impulsions, afin de faire varier l'amplification du deuxième étage 32, jusqu'à ce que les trois composantes {R, V, B} atteignent le code correspondant à la réflexion maximale, soit R=255, V=255 et B=255.

Ensuite, l'appareil étant en mode mesure, il suffit, pour identifier la couleur d'un objet, d'approcher l'ouverture 11 de sa surface 10 et de déclencher la mesure en pressant brièvement sur le bouton de commande 15. Les LED blanches 12 éclairent momentanément l'objet et, comme ci-dessus, le CAN fourni un triplet de valeurs {R, V, B} comprises entre 0 et 255, représentatif de sa couleur.

Le microcontrôleur 17 qui reçoit ce triplet est programmé, selon tout algorithme connu de l'homme de métier, pour :
- identifier, dans les trois colonnes {R, V, B} de la table de correspondance enregistrée dans la mémoire 19, le code couleur {R, V, B} correspondant à, ou le plus proche de, celui mesuré,
- rechercher à quelle couleur ou code couleur enregistré correspond le code {R, V, B} retenues, et
- fournir à l'afficheur 20 ou au circuit audio 21 le signal nécessaire pour afficher le bon code couleur ou prononcer le nom de la couleur identifiée.

Ainsi est proposé un dispositif de reconnaissance des couleurs capable de se calibrer automatiquement, ce qui permet de s'adapter aux caractéristiques de réflexion du support. Une couleur peut ainsi être identifiée précisément, sur une surface lisse ou texturée.

En outre, l'appareil présenté offre l'avantage, grâce à sa calibration automatique, d'être insensible aux dérives dues aux changements de températures et au vieillissement des composants.

Pour une utilisation simplifiée du dispositif décrit ci-dessus, celui-ci peut être fourni avec un set de calibration, comprenant plusieurs supports de textures variées et courantes. A titre d'exemple, ces textures seraient, pour des peintres, des crépis de grains différents. Ces supports sont peints, à l'avance, d'un blanc pur, de référence, correspondant à la réflexion maximale.

Selon le type de crépi, la lumière est réfléchie avec plus ou moins de perte. Les signaux fournis par de tels crépis blancs correspondent à des surfaces lisses d'une palette de gris. En variante, le set de calibration comprend plusieurs supports lisses dont les couleurs sont choisies dans une palette de gris de manière à obtenir des signaux correspondant aux différents crépis usuels.

## Revendications

1. Dispositif de reconnaissance de la couleur d'un objet comportant :
- une source de lumière (12),
- une photodiode (13) divisée en trois secteurs distincts ou trois photodiodes, munis chacun de filtres laissant passer seulement l'une des couleurs de base, rouge, verte et bleue, et fournissant trois signaux électriques représentatifs des composantes rouge, verte et bleue de la couleur de l'objet,
- un amplificateur (16) amplifiant lesdits signaux provenant de la photodiode,
- un convertisseur analogique numérique (18) transformant lesdits signaux amplifiés en une valeur numérique située à l'intérieur d'une échelle numérique,
- une mémoire électronique (19) contenant une table de correspondance qui associe une couleur à différentes combinaisons possibles desdites valeurs numériques,
- un microcontrôleur (17) programmé pour :
- identifier, dans la table de correspondance, la combinaison de valeurs numériques la plus proche de celle mesurée,
- rechercher à quelle couleur correspond ladite combinaison, et
- fournir un signal représentatif de cette couleur, et
- des moyens de signalisation (20, 21) répondant à ce signal pour fournir une information sur la couleur identifiée,
**caractérisé en ce que** ledit amplificateur (16) est à gain variable et **en ce que** ledit microcontrôleur (17) est également programmé pour le commander de manière à ce qu'il applique, à chaque signal provenant de la photodiode, une amplification variable, indépendante et automatique.

2. Dispositif selon la revendication 1, **caractérisé en ce que** ladite amplification est ajustée de manière à fournir un signal correspondant, une fois transformé par le convertisseur analogique numérique (18), à la valeur maximale de ladite échelle numérique.

3. Dispositif selon l'une des revendications 1 et 2, **caractérisé en ce que** ledit amplificateur (16) comporte un premier étage d'amplification fixe (31) et un second étage d'amplification variable (32).

4. Dispositif selon la revendication 3, **caractérisé en ce que** ledit second étage (32) comporte des potentiomètres numériques (33).

5. Dispositif selon l'une des revendications 1 à 4, **caractérisé en ce que** lesdits moyens de signalisation sont des moyens audio (21).

6. Dispositif selon l'une des revendications 1 à 4, **caractérisé en ce que** lesdits moyens de signalisation sont des moyens visuels (20).

7. Procédé de calibration d'un dispositif selon l'une des revendications 1 à 6, **caractérisé en ce qu'**il consiste principalement à :
- obtenir des signaux électriques représentatifs des composantes rouge, verte et bleue d'une surface de référence, dont la réflexion lumineuse correspond à celle d'une surface d'un blanc pur et ayant une texture similaire à celle de l'objet dont on veut identifier la couleur,
- amplifier lesdits signaux et les convertir en un triplet de valeurs {R, V, B} situées à l'intérieur de ladite échelle numérique, et
- varier le gain d'amplification de ces signaux jusqu'à ce que les trois valeurs dudit triplet atteignent les valeurs maximales de l'échelle.

8. Ensemble pour la mise en oeuvre du procédé de calibration selon la revendication 7, **caractérisé en ce qu'**il comprend plusieurs supports de textures variées, peints d'un blanc pur correspondant à la réflexion maximale.

9. Ensemble pour la mise en oeuvre du procédé de calibration selon la revendication 7, **caractérisé en ce qu'**il comprend plusieurs supports lisses dont les couleurs sont choisies dans une palette de gris dont la réflexion correspond à celle de textures variées peintes d'un blanc pur.
